# EUROPEAN PATENT APPLICATION

(11) **EP 4 516 604 A1**
(43) Date of publication of application: **05.03.2025**
(21) Application number: 24187226.6
(22) Date of filing: 08.07.2024
(51) Int. Cl.: B60T 8/172, B60T 8/1761, B60T 8/1766, B60T 13/74

(54) **METHOD AND APPARATUS FOR CONTROLLING BRAKING FORCE OF VEHICLE, STORAGE MEDIUM, AND VEHICLE**

(30) Priority: 31.08.2023 CN 202311121104
(71) Applicant: Xiaomi EV Technology Co., Ltd., 100176 Beijing (CN)
(72) Inventor: MOU, Hengda, Beijing, 100176 (CN)
(74) Representative: Stöckeler, Ferdinand

(57) **Abstract**

The present invention relates to the technical field of vehicles and provides a method for controlling a braking force of a vehicle, a storage medium, and a vehicle. The method includes: determining (511) that a first wheel of the vehicle triggers an antilock brake system (ABS) function, and obtaining braking force of the first wheel as first braking force; computing (S12) a braking force loss value of the vehicle according to the first braking force, and a second braking force before the first wheel triggers the ABS function; and increasing (S13) braking force of a second wheel through an electronic mechanical brake system of the vehicle based on the braking force loss value, the second wheel being one or more wheels that do not trigger the ABS function of the vehicle.

## Description

### TECHNICAL FIELD

The present invention or disclosure relates to the technical field of vehicles, in particular to a method and apparatus for controlling a braking force of a vehicle, a storage medium, and a vehicle.

### BACKGROUND OF THE INVENTION

In a hydraulic brake system, when a brake pedal is pressed by a driver with one foot, a booster assists the driver in pushing a brake fluid from a master cylinder to a wheel cylinder. Under pressure, the wheel cylinder pushes a friction pad to clamp a brake disc, thus performing a brake function.

### SUMMARY OF THE INVENTION

To overcome problems in the related art, the present invention provides a method and apparatus for controlling a braking force of a vehicle, a storage medium, and a vehicle.

According to a first aspect of an example of the present invention, a method for controlling a braking force of a vehicle is provided. The method includes:
obtaining a braking force of a first wheel as a first braking force in response to determining that the first wheel of the vehicle triggers an antilock brake system (ABS) function;
computing a braking force loss value of the vehicle according to the first braking force, and a second braking force before the first wheel triggers the ABS function; and
increasing a braking force of a second wheel through an electronic mechanical brake system of the vehicle based on the braking force loss value, the second wheel being one or more wheels that do not trigger the ABS function of the vehicle.

In an embodiment, computing the braking force loss value of the vehicle according to the first braking force, and the second braking force before the first wheel triggers the ABS function includes:
computing a difference between the first braking force and the second braking force; and
determining the braking force loss value of the vehicle according to the difference.

In an embodiment, increasing the braking force of the second wheel through the electronic mechanical brake system of the vehicle based on the braking force loss value includes:
determining a compensatory braking force based on the braking force loss value; and
additionally distributing the compensatory braking force to the second wheel through the electronic mechanical brake system based on a current braking force of the second wheel.

In an embodiment, determining the compensatory braking force based on the braking force loss value includes:
taking a braking force corresponding to the braking force loss value as the compensatory braking force under the condition of one second wheel;
taking a braking force corresponding to the braking force loss value as lost braking force under the condition of a plurality of second wheels; and
obtaining a compensatory braking force of the second wheels by distributing the lost braking force to the second wheels.

In an embodiment, obtaining the compensatory braking force of the second wheels by distributing the lost braking force to the second wheels includes:
obtaining the compensatory braking force of the second wheels by evenly distributing the lost braking force to the second wheels.

In an embodiment, obtaining the compensatory braking force the of second wheels by distributing the lost braking force to the second wheels includes:
obtaining current vertical loads of the second wheels;
computing a sum of the vertical loads of the second wheels; and
computing, for the second wheels, the compensatory braking force of the second wheel according to the lost braking force and a ratio of the vertical load of the second wheel to the sum of the vertical loads.

According to a second aspect of an example of the present invention, an apparatus for controlling a braking force of a vehicle is provided. The apparatus includes:
a first obtainment module configured to obtain braking force of a first wheel as first braking force in response to determining that the first wheel of the vehicle triggers an ABS function;
a first computation module configured to compute a braking force loss value of the vehicle according to the first braking force, and a second braking force before the first wheel triggers the ABS function; and
a first execution module configured to increase braking force of a second wheel through an electronic mechanical brake system of the vehicle based on the braking force loss value, the second wheel being one or more wheels that do not trigger the ABS function of the vehicle.

In an embodiment, the first computation module includes:
a difference computation sub-module configured to compute a difference between the first braking force and the second braking force; and
a loss determination sub-module configured to determine the braking force loss value of the vehicle according to the difference.

In an embodiment, the first execution module includes:
a third execution sub-module configured to determine a compensatory braking force based on the braking force loss value; and
a fourth execution sub-module configured to additionally distribute the compensatory braking force to the second wheel through the electronic mechanical brake system based on a current braking force of the second wheel.

In an embodiment, the third execution sub-module includes:
a first execution sub-unit configured to take braking force corresponding to the braking force loss value as the compensatory braking force under the condition of one second wheel;
a second execution sub-unit configured to take braking force corresponding to the braking force loss value as lost braking force under the condition of a plurality of second wheels; and
a third execution sub-unit configured to obtain a compensatory braking force of the second wheels by distributing the lost braking force to the second wheels.

In an embodiment, the third execution sub-unit is configured to:
obtain the compensatory braking force of the second wheels by evenly distributing the lost braking force to the second wheels.

In an embodiment, the third execution sub-unit is configured to:
obtain current vertical loads of the second wheels;
compute a sum of the vertical loads of the second wheels; and
compute, for the second wheels, the compensatory braking force of the second wheel according to the lost braking force and a ratio of the vertical load of the second wheel to the sum of the vertical loads.

According to a third aspect of an example of the present invention, a vehicle is provided. The vehicle includes:
one or more processors; and
a memory configured to store a processor-executable instruction; where
the one or more processors are collectively configured to execute steps of the method according to any one in the first aspect of the present invention.

According to a fourth aspect of an example of the present invention, a non-transitory computer-readable storage medium is provided. The non-transitory computer-readable storage medium stores a computer program instruction, where the program instruction implements steps of the method according to any one in the first aspect when performed by one or more processors.

In the solution, the first braking force of the first wheel may be obtained in response to determining that the first wheel of the vehicle triggers the ABS function. Thus, the braking force loss value of the vehicle may be computed according to the first braking force, and the second braking force before the first wheel triggers the ABS function. In this way, a braking force loss caused by triggering the ABS function of the vehicle may be computed. In addition, the braking force of the second wheel may be increased through the electronic mechanical brake system of the vehicle based on the braking force loss value, the second wheel being one or more wheels that do not trigger the ABS function of the vehicle.

This is, according to the solution, after the braking force of the vehicle is lost because the first wheel triggers the ABS function, the braking force of the second wheel that does not trigger the ABS function is increased. In this way, compensation for the lost braking force can be implemented, a braking performance of the vehicle is guaranteed, and safety of the vehicle is improved.

It should be understood that the above general description and the following detailed description are merely illustrative and explanatory, and cannot limit the present invention.

### BRIEF DESCRIPTION OF DRAWINGS

The drawings here are incorporated into the description as a constituent part of the description, illustrate examples conforming to the present invention, and serve to explain principles of the present invention along with the description.
Fig. 1 is a flowchart of a method for controlling a braking force of a vehicle according to an example.
Fig. 2 is an implementation flowchart of S13 in Fig. 1 according to an example.
Fig. 3 is a flowchart of determining a compensatory braking force of a second wheel according to an example.
Fig. 4 is a block diagram of an apparatus for controlling a braking force of a vehicle according to an example.
Fig. 5 is a block diagram of a vehicle 600 according to an example.

### DETAILED DESCRIPTION OF THE INVENTION

Examples will be described in detail here, and their instances are shown in the accompanying drawings. When the following description involves the accompanying drawings, the same numerals in different accompanying drawings indicate the same or similar elements unless otherwise indicated. Embodiments described in the following examples do not denote all embodiments consistent with the present invention. On the contrary, these embodiments are merely instances of apparatuses and methods consistent with some aspects of the present invention as detailed in the appended claims.

Before introducing a method and apparatus for controlling a braking force of a vehicle, a storage medium, and a vehicle, an application scenario of an example of the present invention is introduced at first.

In a hydraulic brake system, no matter whether the brake system is decoupled or not, a working principle may be described as follows: when a brake pedal is pressed by a driver, a booster assists the driver in pushing brake fluid from a master cylinder to a wheel cylinder. Under pressure, the wheel cylinder pushes a friction pad to clamp a brake disc, thus performing a brake function.

It should be noted that in the above brake system, when the driver presses the brake pedal, the pressure of the master cylinder is equal to the pressure of wheel cylinders of four wheels. However, during a braking process, one or more wheels may be locked due to a high braking pressure or a low road adhesion coefficient. In this case, the ABS function is triggered. The ABS function keeps the wheels in a set slip rate range through threshold control or slip rate control, thus obtaining road friction force that is more in line with a control strategy.

In general, when the ABS function is triggered, a locked wheel may actively reduce the pressure under the control of the ABS. However, due to a decrease in the pressure of the locked wheel, a pressure of the master cylinder of the wheel that triggers the ABS function may be greater than the pressure of the wheel cylinder. The pressure of the master cylinder of a wheel that does not trigger the ABS function is still equal to the pressure of the wheel cylinder.

For example, in some hydraulic brake systems, brake fluid discharged from the wheel cylinder may flow into an accumulator when the ABS works because of the pipeline design. Then, a motor works to pump the fluid from the accumulator back to a brake circuit. The fluid entering the brake circuit may enter the wheel cylinder of the other wheel in the same brake circuit. It should be noted that since the fluid in the accumulator cannot provide braking force, a braking force loss may occur after the fluid flows into the accumulator.

Moreover, the brake system of the vehicle is X-type or II-type in general, such that the brake fluid can only be transferred in the same brake circuit. It should be understood that in this case, it is impossible to compensate for braking force of the wheels in the other brake circuit.

With the X-type arrangement as an example, a left front wheel and a right rear wheel of the vehicle are in one brake circuit, and a right front wheel and a left rear wheel are in one brake circuit. When the left front wheel and the right rear wheel trigger the ABS function at the same time, the fluids discharged from the wheel cylinders cannot be transferred to the wheel cylinders of the right front wheel and the left rear wheel, such that compensation for the braking force cannot be implemented.

Thus, after the ABS function is triggered, the brake system in the relevant scenario may suffer a large braking force loss, and the braking performance and safety of the vehicle are reduced accordingly.

To this end, an example of the present invention provides a method for controlling a braking force of a vehicle. The method may be performed by a control apparatus. The control apparatus may be a constituent portion of a vehicle, or may be arranged independently of the vehicle.

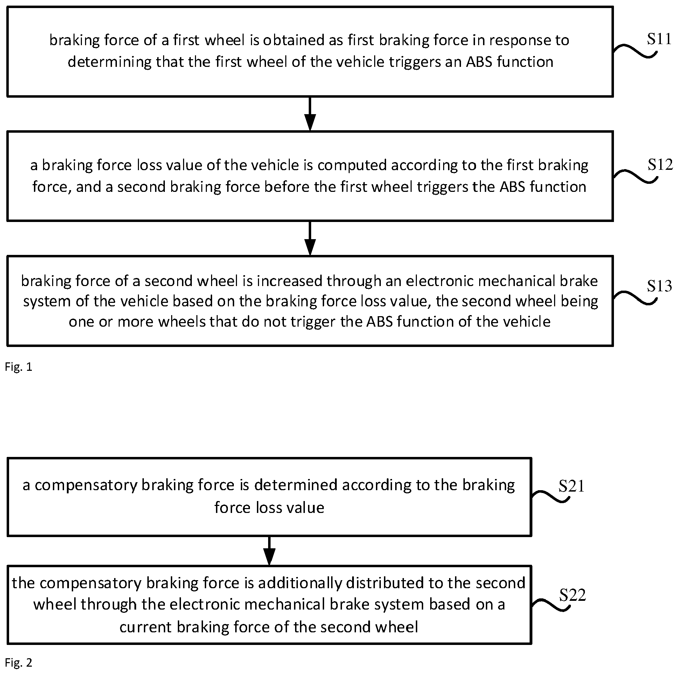

Fig. 1 is a flowchart of a method for controlling the braking force of a vehicle according to an example of the present invention. With reference to Fig. 1, the method includes steps 11, 12 and 13.

S11, braking force of a first wheel is obtained as first braking force in response to determining that the first wheel of the vehicle triggers an ABS function.

S12, a braking force loss value of the vehicle is computed according to the first braking force, and a second braking force before the first wheel triggers the ABS function.

For example, a difference between the first braking force and the second braking force may be computed, and the braking force loss value of the vehicle may be determined according to the difference.

It should be noted that one or more wheels in the vehicle may trigger the ABS function. Thus, one or more first wheels may be provided.

For example, in an embodiment, one first wheel is provided. The steps that a difference between the first braking force and the second braking force is computed, and the braking force loss value of the vehicle is determined according to the difference include:
a difference between the first braking force and the second braking force is computed; and
the braking force loss value of the vehicle is determined by the difference.

It should be understood that in a scenario of vehicle braking, total braking force of the whole vehicle and braking force of each wheel may be determined according to drive demand. After the first wheel triggers the ABS function, the ABS system intervenes and controls the braking force of the first wheel. Thus, there may be a difference between the first braking force after the first wheel triggers the ABS function and the second braking force before the first wheel triggers the ABS function.

By computing the difference, the lost braking force of the vehicle may be determined.

In the above example, one first wheel is provided. For example, the vehicle has one wheel triggering the ABS function. Thus, the difference between the first braking force and the second braking force may be computed, and the difference may be taken as the braking force loss value of the vehicle.

In an embodiment, where the number of first wheels is a plurality, the steps that a difference between the first braking force and the second braking force is computed, and the braking force loss value of the vehicle is determined according to the difference include:
a difference between the first braking force and the second braking force of the first wheel is computed for the first wheel; and
a sum of differences between the first braking force and the second braking force of the first wheels is computed, and the braking force loss value of the vehicle is obtained.

In other words, for each wheel that triggers the ABS function, the braking force of the wheel before the ABS function is triggered and the braking force after the ABS function is triggered may be obtained. In this way, the braking force loss value caused by the wheel may be obtained by computing the difference between the braking force after the ABS function is triggered and the braking force before the ABS function is triggered. By adding the differences of the plurality of wheels, the braking force loss value of the vehicle may be obtained.

With reference to Fig. 1, S13, braking force of a second wheel is increased through an electronic mechanical brake system of the vehicle based on the braking force loss value, the second wheel being one or more wheels that do not trigger the ABS function of the vehicle.

The electronic mechanical brake system (EMB) is a brake system based on electronic control. It does not have hydraulic pipe, and the braking pressure of the wheel is implemented with electrical signals. Thus, the electronic mechanical brake system may decouple the braking pressure of the wheel, and then control the braking force of each wheel independently.

Thus, in S13, the braking force of the second wheel may be selectively increased through the electronic mechanical brake system of the vehicle.

Fig. 2 is an implementation flowchart of S13 in Fig. 1 shown according to an example of the present invention. With reference to Fig. 2, the step that braking force of a second wheel is increased through an electronic mechanical brake system of the vehicle based on the braking force loss value includes steps 21 and 22.

S21, a compensatory braking force is determined according to the braking force loss value.

A method for determining the compensatory braking force will be illustratively described below.

In an embodiment, the number of second wheels is one. In this case, braking force corresponding to the braking force loss value may be taken as the compensatory braking force.

For example, under the condition that the braking force loss value is -1000, the lost braking force of the vehicle may be determined as 1000 N. Thus, the braking force corresponding to the braking force loss value may be taken as the compensatory braking force. For example, the compensatory braking force is 1000 N.

However, since one wheel that does not trigger the ABS function exists in the vehicle, the 1000 N may be distributed to the wheel as the compensatory braking force of the wheel.

The above solution can completely compensate for the lost braking force to the wheel that does not trigger the ABS. Thus, the braking force loss of the vehicle can be reduced.

In an embodiment, the number of second wheels is a plurality. In this case, the braking force corresponding to the braking force loss value may be taken as the compensatory braking force, and the compensatory braking force of the second wheels is determined by distributing the lost braking force to the second wheels.

Illustratively, under the condition that the braking force loss value is -1000, the lost braking force of the vehicle may be determined as 1000 N. Thus, the braking force corresponding to the braking force loss value may be taken as the compensatory braking force. For example, the compensatory braking force is 1000 N.

However, since a plurality of wheels that do not trigger the ABS function exist in the vehicle, the 1000 N may be distributed to the plurality of wheels, and the compensatory braking force for each wheel may be determined accordingly.

The above solution can completely compensate for the lost braking force of the wheel that does not trigger the ABS. Thus, the braking force loss of the vehicle can be reduced. Moreover, according to the above solution, the braking force is further distributed when compensation for the lost braking force to the wheels that do not trigger the ABS is implemented. In this way, the risk that the second wheel also triggers the ABS function due to the compensatory braking force is reduced.

An embodiment of distributing the lost braking force to each of the second wheels will be illustratively described below.

In a possible embodiment, the step that a compensatory braking force of the second wheels is obtained by distributing the lost braking force to the second wheels includes:
the compensatory braking force of the second wheels is obtained by evenly distributing the lost braking force to the second wheels.

Illustratively, if the compensatory braking force is 1000 N and 3 second wheels are provided, 1000 N may be equally distributed to the 3 second wheels.

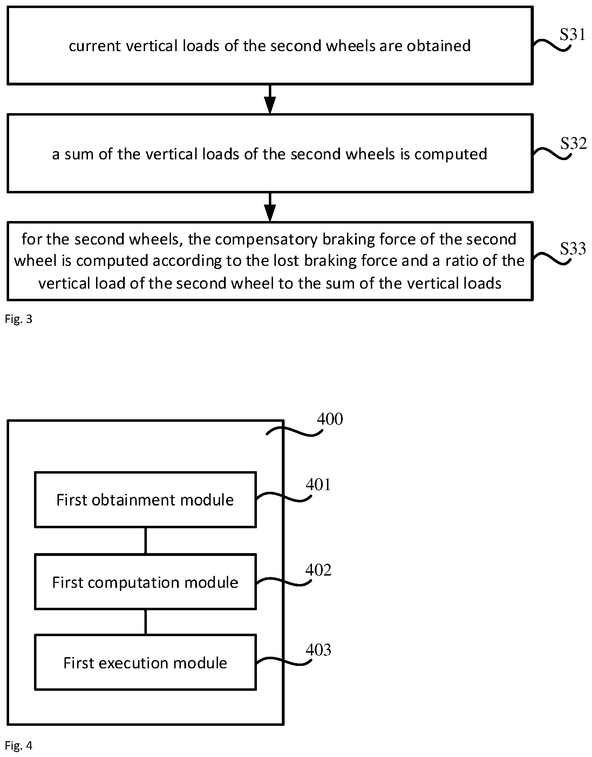

Fig. 3 is a flowchart of determining a compensatory braking force of a second wheel according to an example of the present invention. With reference to Fig. 3, in a possible embodiment, the step that a compensatory braking force of the second wheels is obtained by distributing the lost braking force to the second wheels includes steps 31, 32 and 33.

S31, current vertical loads of the second wheels are obtained.

S32, a sum of the vertical loads of the second wheels is computed.

S33, for the second wheels, the compensatory braking force of the second wheel is computed according to the lost braking force and a ratio of the vertical load of the second wheel to the sum of the vertical loads.

Illustratively, the compensatory braking force is 1000 N, and 3 second wheels are provided and denoted as A, B and C respectively. A current vertical load of A is denotes as X, a current vertical load of B is denotes as Y, and a current vertical load of C is denotes as Z. In this way, the compensatory braking force of A is equal to 1000X/(X+Y+Z) in a unit of N. The compensatory braking force of B is 1000Y/(X+Y+Z) in a unit of N. The compensatory braking force of C is 1000Z/(X+Y+Z) in a unit of N.

According to the above solution, the compensatory braking force may be distributed according to the vertical loads of the second wheels. The utilization rate of the braking force can be improved through the distribution method.

In addition, it should be noted that in the above example, the embodiment of S21 is illustratively described with an example of taking the braking force corresponding to the braking force loss value as the compensatory braking force. However, during specific implementation, those skilled in the art may also determine the compensatory braking force according to demand.

For example, in some embodiments, the braking force corresponding to the braking force loss value may be determined, and a product of the braking force and a target ratio may be used as the compensatory braking force. The target ratio may be selected as needed, such as 50%, 60% and 70%.

With reference to Fig. 2, S22 includes: the compensatory braking force is additionally distributed to the second wheel through the electronic mechanical brake system based on a current braking force of the second wheel.

In the above example, if the current braking force of A is denoted as O, the compensatory braking force of A is 1000X/(X+Y+Z). Then, the braking force of 1000X/(X+Y+Z) may be additionally distributed to A through the electronic mechanical brake system, such that the braking force of A is equal to O+1000X/(X+Y+Z) in a unit of N.

Similarly, if the current braking force of B is denoted as P, and the current braking force of C is denoted as Q, after distribution, the braking force of B is equal to P+1000Y/(X+Y+Z) and the braking force of C is Q+1000Z/(X+Y+Z). In this way, through braking force compensation, the braking force of wheels A, B and C is additionally increased by 1000 N, such that compensation for a decrease of 1000 N in the braking force due to triggering of the ABS by the first wheel can be implemented.

In the solution, the first braking force of the first wheel may be obtained in response to determining that the first wheel of the vehicle triggers the ABS function. Thus, the braking force loss value of the vehicle may be computed according to the first braking force, and the second braking force before the first wheel triggers the ABS function. In this way, a braking force loss caused by triggering the ABS function of the vehicle may be computed. In addition, the braking force of the second wheel may be increased through the electronic mechanical brake system of the vehicle based on the braking force loss value, the second wheel being one or more wheels that do not trigger the ABS function of the vehicle.

This is, according to the solution, after the braking force of the vehicle is lost because the first wheel triggers the ABS function, the braking force of the second wheel that does not trigger the ABS function is increased. In this way, compensation for the lost braking force can be implemented, a braking performance of the vehicle is guaranteed, and safety of the vehicle is improved.

In addition, it should be noted that the methods in Figs. 1-3 may be repeatedly performed many times. For example, after the braking force of 1000X/(X+Y+Z) is additionally distributed to A, if the wheel A triggers the ABS function, the above methods in Figs. 1-3 may be repeatedly performed. For example, when S11 in Fig. 1 is executed, a wheel A may also be used as a new first wheel. In addition, the wheel A is also taken into account when the braking force loss value of the vehicle is computed.

For example, if total braking force distribution is Ft = F_{FL}+F_{FR}+F_{RL}+F_{RR}, F_{FL} denotes braking force requested by the left front wheel, F_{FR} denotes braking force requested by the right front wheel, F_{RL} denotes braking force requested by the left rear wheel and F_{RR} denotes braking force requested by the right rear wheel.

When braking, if the braking force is decreased because the ABS function is triggered by the left front wheel, the decreased braking force is equal to F_{FLABS}. Then, the braking force lost due to triggering of the ABS function is F_{Lost}=F_{FL}-F_{FLABS}. In this case, secondary distribution of braking force may be performed. For example, the F_{Lost} is distributed to other wheels. For example, in an embodiment, the F_{Lost} may be evenly distributed to other wheels. In an embodiment, the F_{Lost} may also be distributed to other wheels according to vertical loads of other wheels.

For example, F_{Lost} may be equally distributed to other wheels. In this way, actual braking force of four wheels after the second distribution is F_{FL}=F_{FLABS}, F_{FR}=F_{FR}+ F_{Lost}/3, F_{RL}=F_{RL}+ F_{Lost}/3, F_{RR}=F_{RR}+ F_{Lost}/3. If the braking force of one wheel is increased due to the secondary distribution and the ABS function is triggered, the braking force may be distributed for a third time.

With the ABS function being triggered by the right front wheel after the second distribution as an example, an increase in the braking force of the right front wheel after the second distribution is F_{FRadd}=F_{FRABS}-F_{FR} relative to the first distribution. Total lost braking force is F_{Lost}, and the braking force of the vehicle after secondary distribution is still decreased by F_{Lost}-F_{FRadd} compared with Ft.

Thus, the braking force may be distributed for the third time, so as to evenly distribute the decreased F_{Lost}-F_{FRadd} to the left rear wheel and the right rear wheel.

In this way, by repeating the braking force distribution process, compensation for the lost braking force to the wheels that do not trigger the ABS can be implemented. Thus, it is guaranteed that the braking force of the vehicle is not lost and the braking performance is improved.

Based on the same invention concept, an example of the present invention further provides an apparatus for controlling a braking force of a vehicle. Fig. 4 is a block diagram of an apparatus 400 for controlling the braking force of a vehicle according to the present invention. With reference to Fig. 4, the apparatus 400 for controlling the braking force of a vehicle includes a first obtainment module 401, a first computation module 402 and a first execution module 403.

The first obtainment module 401 configured to obtain braking force of a first wheel as first braking force in response to determining that the first wheel of the vehicle triggers an ABS function;

The first computation module 402 configured to compute a braking force loss value of the vehicle according to the first braking force, and a second braking force before the first wheel triggers the ABS function; and

The first execution module 403 configured to increase braking force of a second wheel through an electronic mechanical brake system of the vehicle based on the braking force loss value, the second wheel being one or more wheels that do not trigger the ABS function of the vehicle.

In the solution, the first braking force of the first wheel may be obtained in response to determining that the first wheel of the vehicle triggers the ABS function. Thus, the braking force loss value of the vehicle may be computed according to the first braking force, and the second braking force before the first wheel triggers the ABS function. In this way, a braking force loss caused by triggering the ABS function of the vehicle may be computed. In addition, the braking force of the second wheel may be increased through the electronic mechanical brake system of the vehicle based on the braking force loss value, the second wheel referring to or being one or more wheels that do not trigger the ABS function of the vehicle.

This is, according to the solution, after the braking force of the vehicle is lost because the first wheel triggers the ABS function, the braking force of the second wheel that does not trigger the ABS function is increased. In this way, compensation for the lost braking force can be implemented, a braking performance of the vehicle is guaranteed, and safety of the vehicle is improved.

In an embodiment, the first computation module 402 includes:
a difference computation sub-module configured to compute a difference between the first braking force and the second braking force; and
a loss determination sub-module configured to determine the braking force loss value of the vehicle according to the difference.

In an embodiment, the first execution module 403 includes:
a third execution sub-module configured to determine a compensatory braking force based on the braking force loss value; and
a fourth execution sub-module configured to additionally distribute the compensatory braking force to the second wheel through the electronic mechanical brake system based on a current braking force of the second wheel.

In an embodiment, the third execution sub-module includes:
a first execution sub-unit configured to take braking force corresponding to the braking force loss value as the compensatory braking force under the condition of one second wheel;
a second execution sub-unit configured to take braking force corresponding to the braking force loss value as lost braking force under the condition of a plurality of second wheels; and
a third execution sub-unit configured to obtain a compensatory braking force of the second wheels by distributing the lost braking force to the second wheels.

In an embodiment, the third execution sub-unit is configured to:
obtain the compensatory braking force of the second wheels by evenly distributing the lost braking force to the second wheels.

In an embodiment, the third execution sub-unit is configured to:
obtain current vertical loads of the second wheels;
compute a sum of the vertical loads of the second wheels; and
compute, for the second wheels, the compensatory braking force of the second wheel according to the lost braking force and a ratio of the vertical load of the second wheel to the sum of the vertical loads.

An example of the present invention further provides a vehicle. The vehicle includes:
one or more processors; and
a memory configured to store a processor-executable instruction; where
the one or more processors are collectively configured to execute steps of the method for controlling a braking force of a vehicle in any example of the present invention.

The present invention further provides a non-transitory computer-readable storage medium. The non-transitory computer-readable storage medium stores a computer program instruction. The program instruction implements steps of the method for controlling a braking force of a vehicle in any example of the present invention when performed by one or more processors.

With respect to the apparatus for controlling a braking force of a vehicle in an example described above, specific methods in which the modules execute operations have been described in detail in an example related to the method for controlling a braking force of a vehicle, and will not be described in detail here.

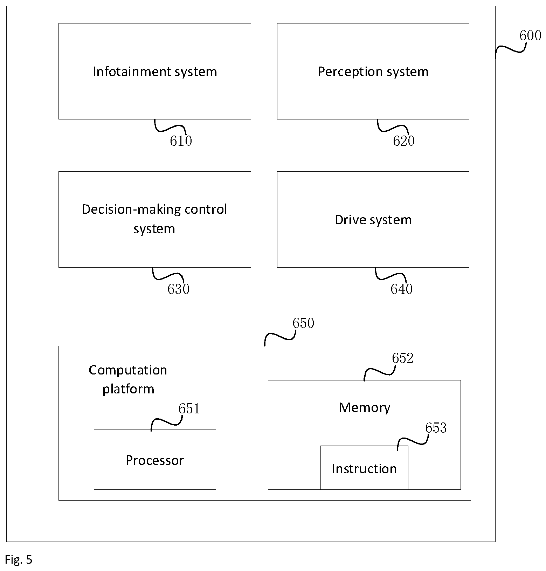

Fig. 5 is a block diagram of a vehicle 600 according to an example. For example, the vehicle 600 may be a hybrid vehicle, a non-hybrid vehicle, an electric vehicle, a fuel cell vehicle or a different type of vehicle. The vehicle 600 may be an autonomous vehicle, a semi-autonomous vehicle or a non-autonomous vehicle. The vehicle 600 may be equipped with an electronic mechanical brake system.

With reference to Fig. 5, the vehicle 600 may include various subsystems, such as an infotainment system 610, a perception system 620, a decision-making control system 630, a drive system 640, and a computation platform 650. The vehicle 600 may further include more or fewer subsystems, and each subsystem may include a plurality of components. In addition, subsystems and components of the vehicle 600 may be interconnected by a wired or wireless method.

In some examples, the infotainment system 610 may include a communication system, an entertainment system, a navigation system, etc.

The perception system 620 may include several sensors that sense information about environment around the vehicle 600. For example, the perception system 620 may include a global positioning system (which may be a GPS system, a Beidou system or other positioning systems), an inertial measurement unit (IMU), a laser radar, a millimeter-wave radar, an ultrasonic radar, and a camera device.

The decision-making control system 630 may include a computation system, a vehicle controller, a steering system, a throttle and a brake system.

The drive system 640 may include assemblies that provide power movement for the vehicle 600. In an example, the drive system 640 may include an engine, an energy source, a transmission system and wheels. The engine may be one or a combination of an internal combustion engine, an electric motor and an air compression engine. The engine converts the energy source into mechanical energy.

Some or all functions of the vehicle 600 are controlled by the computation platform 650. The computation platform 650 may include one or more processors 651 and a memory 652, and the processors 651 may execute instructions 653 stored in the memory 652.

The processors 651 may be any conventional processor, such as a commercially available CPU. The processor may further include a graphic process unit (GPU), a field programmable gate array (FPGA), a system on chip (SOC), an application specific integrated circuit (ASIC) or their combinations.

The memory 652 may be implemented by any type of volatile or non-volatile storage devices or their combinations, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

In addition to the instruction 653, the memory 652 may also store data, such as road maps, route information, vehicle positions, directions and speeds. The data stored in the memory 652 may be used by the computation platform 650.

In an example of the present invention, the processors 651 may execute the instruction 653, to complete all or some of steps of the method for controlling a braking force of a vehicle described above.

Another example further provides a computer program product. The computer program product includes a computer program-executable by a programmable apparatus, and the computer program has code portions configured to execute the above method for controlling a braking force of a vehicle when performed by the programmable apparatus.

A person of ordinary skill in the art will readily conceive of other implementation solutions of the present invention after considering the description and implementing the present invention. The present invention is intended to cover any modification, use or adaptive change of the present invention, which follows general principles of the present invention and includes common general knowledge or conventional technical means in the technical field not disclosed in the present invention. The description and examples are merely considered illustrative, and a true scope and spirit of the present invention are indicated by the following claims.

It should be understood that the present invention is not limited to precise structures described above and shown in the accompanying drawings, and various modifications and changes can be made without departing from the scope of the present invention. The scope of the present invention is merely limited by the appended claims.

## Claims

1. A method for controlling a braking force of a vehicle, comprising:
determining (S11) that a first wheel of the vehicle triggers an antilock brake system, ABS, function, and obtaining a braking force of the first wheel as a first braking force;
computing (S12) a braking force loss value of the vehicle according to the first braking force, and a second braking force before the first wheel triggers the ABS function; and
increasing (S13) a braking force of a second wheel through an electronic mechanical brake system of the vehicle based on the braking force loss value, the second wheel being one or more wheels that do not trigger the ABS function of the vehicle.

2. The method according to claim 1, wherein computing the braking force loss value of the vehicle according to the first braking force, and the second braking force before the first wheel triggers the ABS function comprises:
computing a difference between the first braking force and the second braking force; and
determining the braking force loss value of the vehicle according to the difference.

3. The method according to claim 1 or 2, wherein increasing the braking force of the second wheel through an electronic mechanical brake system of the vehicle based on the braking force loss value comprises:
determining (S21) a compensatory braking force based on the braking force loss value; and
additionally (S22) distributing the compensatory braking force to the second wheel through the electronic mechanical brake system based on a current braking force of the second wheel.

4. The method according to claim 3, wherein determining the compensatory braking force based on the braking force loss value comprises:
determining the number of second wheels as one and taking a braking force corresponding to the braking force loss value as the compensatory braking force.

5. The method according to claim 3, wherein determining the compensatory braking force based on the braking force loss value comprises:
determining that the number of second wheels is a plurality, and taking a braking force corresponding to the braking force loss value as lost braking force; and
obtaining a compensatory braking force of the second wheels by distributing the lost braking force to the second wheels.

6. The method according to claim 5, wherein obtaining the compensatory braking force of the second wheels by distributing the lost braking force to the second wheels comprises:
obtaining the compensatory braking force of the second wheels by evenly distributing the lost braking force to the second wheels.

7. The method according to claim 5, wherein obtaining the compensatory braking force of the second wheels by distributing the lost braking force to the second wheels comprises:
obtaining (S31) current vertical loads of the second wheels;
computing (S32) a sum of the vertical loads of the second wheels; and
computing (S33), for the second wheels, the compensatory braking force of the second wheel according to the lost braking force and a ratio of the vertical load of the second wheel to the sum of the vertical loads.

8. A vehicle (600), comprising:
one or more processors; and
a memory configured to store a processor-executable instruction; wherein
the one or more processors are collectively configured to execute the instruction to:
determine (S11) that a first wheel of the vehicle triggers an antilock brake system, ABS, function, and obtain braking force of the first wheel as first braking force;
compute (S12) a braking force loss value of the vehicle according to the first braking force, and a second braking force before the first wheel triggers the ABS function; and
increase (S13) braking force of a second wheel through an electronic mechanical brake system of the vehicle based on the braking force loss value, the second wheel being one or more wheels that do not trigger the ABS function of the vehicle.

9. The vehicle (600) according to claim 8, wherein the instruction that causes the one or more processors (651) to collectively compute the braking force loss value of the vehicle according to the first braking force, and the second braking force before the first wheel triggers the ABS function further causes the one or more processors (651) to collectively:
compute a difference between the first braking force and the second braking force; and
determine the braking force loss value of the vehicle according to the difference.

10. The vehicle (600) according to claim 8 or 9, wherein the instruction that causes the one or more processors (651) to collectively increase the braking force of the second wheel through an electronic mechanical brake system of the vehicle based on the braking force loss value further causes the one or more processors (651) to collectively:
determine (S21) a compensatory braking force based on the braking force loss value; and
additionally (S22) distribute the compensatory braking force to the second wheel through the electronic mechanical brake system based on a current braking force of the second wheel.

11. The vehicle (600) according to claim 10, wherein the instruction that causes the one or more processors (651) to collectively determine the compensatory braking force based on the braking force loss value further causes the one or more processors (651) to collectively:
determine the number of second wheels as one and take braking force corresponding to the braking force loss value as the compensatory braking force.

12. The vehicle (600) according to claim 10, wherein the instruction that causes the one or more processors (651) to collectively determine the compensatory braking force based on the braking force loss value further causes the one or more processors (651) to collectively:
determine that the number of second wheels is a plurality, and take braking force corresponding to the braking force loss value as lost braking force; and
obtain a compensatory braking force of the second wheels by distributing the lost braking force to the second wheels.

13. The vehicle (600) according to claim 12, wherein the instruction that causes the one or more processors (651) to collectively obtain the compensatory braking force of the second wheels by distribute the lost braking force to the second wheels further causes the one or more processors (651) to collectively:
obtain the compensatory braking force of the second wheels by evenly distributing the lost braking force to the second wheels.

14. The vehicle (600) according to claim 12, wherein the instruction that causes the one or more processors (651) to collectively obtain the compensatory braking force of the second wheels by distribute the lost braking force to the second wheels further causes the one or more processors (651) to collectively:
obtain (S31) current vertical loads of the second wheels;
compute (S32) a sum of the vertical loads of the second wheels; and
compute (S33), for the second wheels, the compensatory braking force of the second wheel according to the lost braking force and a ratio of the vertical load of the second wheel to the sum of the vertical loads.

15. A non-transitory computer-readable storage medium, storing a computer program instruction, wherein the program instruction implements steps of the method according to any one of claims 1-7 when performed by one or more processors.
